# EUROPEAN PATENT SPECIFICATION

(11) **EP 2 253 458 B1**
(45) Date of publication and mention of the grant of the patent: **19.08.2015**
(21) Application number: 10163394.9
(22) Date of filing: 20.05.2010
(51) Int. Cl.: B29C 65/52, D06H 5/00, A41H 43/04, A41D 27/24

(54) **Cloth bonding apparatus**
Vorrichtung zum Verbinden vom Stoff
Appareil de liaison de tissus

(30) Priority: 22.05.2009 JP 2009123947
(43) Date of publication of application: 24.11.2010
(73) Proprietor: Brother Kogyo Kabushiki Kaisha, Nagoya-shi, Aichi 467-8561 (JP)
(72) Inventor: Umeda, Kazutoshi, Nagoya-shi Aichi 467-8562 (JP); Yamaura, Hiroki, Nagoya-shi Aichi 467-8562 (JP); Iwakoshi, Hiroyasu, Nagoya-shi Aichi 467-8562 (JP); Enya, Tetsuji, Nagoya-shi Aichi 467-8562 (JP); Nishimura, Kazuto, Nagoya-shi Aichi 467-8562 (JP)
(74) Representative: Prüfer & Partner GbR European Patent Attorneys

(56) References cited:
- WO-A1-01/89812
- CH-A- 478 279
- FR-A- 940 262
- JP-A- 7 070 807
- US-A- 2 525 355
- US-A1- 2003 010 439

## Description

The present invention relates to a cloth bonding apparatus. More specifically, the present invention relates to a cloth bonding apparatus that bonds cloths by applying an adhesive to the cloths and pressing the cloths together.

A cloth bonding apparatus is directed for bonding cloths with an adhesive, instead of sewing the cloths with a needle and a thread. The cloth bonding apparatus discharges a liquid adhesive between the oppositely arranged cloths from a nozzle. The adhesive adheres to the cloths. The cloth bonding apparatus presses and feeds the cloths between which the adhesive has been applied with a feed means (a roller, for example), thereby bonding the cloths. Since no thread is used for the bonded cloths, the surfaces of the bonded cloths have no unevenness that may be formed by the thread.

The cloth bonding apparatus needs to discharge the adhesive onto the cloth on an upstream side of the roller in relation to a feed direction of the cloths (hereinafter referred to a cloth feed direction). It may be desirable for the adhesive to be applied to the cloths with an appropriate width, in order to ensure a bonding strength of the cloths. A cloth bonding apparatus disclosed in Japanese Patent Application JP-1995-70807, includes a nozzle supported by a support portion. The support portion has a channel for an adhesive. The nozzle has a bar shape and projects from one side of the support portion. The support portion supports the nozzle such that the nozzle intersects with the cloth feed direction. Thus, the adhesive adheres onto the moving cloth with an appropriate width. When using the cloth bonding apparatus, a worker (operator) arranges the nozzle between the oppositely arranged cloth (two layers of cloth) and then starts a bonding process. A feed mechanism presses the two layers of cloth after the adhesive is applied between the two layers of cloth. Thus, the bonding process may proceed smoothly.

Other cloth bonding apparatuses are known from US 2003/010439 A1; WO 01/89812 A1; CH 478 279 A; US 2,525,355 A and FR 940 262 A.

### SUMMARY

When using the cloth bonding apparatus disclosed in the aforementioned publication, the worker needs to place the nozzle between the oppositely arranged two layers of cloth. The nozzle projects horizontally from a lower end portion of the support portion. Thus, the worker can freely move the lower cloth placed below the nozzle. To the contrary, the support portion may restrict a movable range of the upper cloth placed above the nozzle. In the cloth bonding apparatus, a pillar portion and the like extending upward from a bed portion are located around the nozzle. Thus, when the worker changes an arrangement of the cloth in order to smoothly feed the upper cloth above the nozzle, the pillar portion and the like may also restrict the movable range of the cloth. As described above, there may be a bonding process in which the support portion restricts a change in a cloth arrangement and thus an appropriate cloth feed is difficult. Consequently, there may be a case where the cloth bonding apparatus can not smoothly perform the bonding work.

An object of the present invention is to provide a cloth bonding apparatus that can relax restrictions on a cloth feed and that can be applicable to various bonding processes in which cloth arrangements are varied.

A cloth bonding apparatus according to the present invention includes a bar-shaped nozzle, a feeding portion, a support portion, and a switch portion. The nozzle includes a discharge port, through which an adhesive is dischargeable between oppositely arranged two layers of cloth. The feeding portion is adapted to press and feed the two layers of cloth between which the adhesive is applied. The support portion includes a channel adapted to lead the adhesive to the nozzle, and supports the nozzle at a leading end thereof. A longitudinal direction of the nozzle intersects with a feed direction of the two layers of cloth by the feeding portion. The switch portion can switch a posture of the support portion between a first posture in which the nozzle extends in a first direction and a second posture in which the nozzle extends in a second direction. The first direction intersects with the feed direction, and the second direction intersects with the feed direction and opposite to the first direction.

With the cloth bonding apparatus, a worker can switch the posture of the support portion depending on a bonding process, thereby avoid restrictions on a movement of the cloth due to the support portion. Therefore, the worker can perform various bonding processes with one cloth bonding apparatus.

In the cloth bonding apparatus, the switch portion may include an attachment portion with which the support portion can be attached to or detached from a main body of the cloth bonding apparatus. Either one of a first support portion, which is adapted to take the first posture when attached to the attachment portion, and a second support portion, which is adapted to take the second posture when being attached to the attachment portion, may be alternatively attached as the support portion to the attachment portion.

In such a case, by simply attaching either one of the first support portion and the second support portion that is suitable for the bonding process, the worker can perform the various bonding processes.

In the cloth bonding apparatus, the support portion may include a fit portion formed at a base end thereof. The attachment portion may include a fit hole adapted to fit with the fit portion of the support portion, a supply channel adapted to supply the adhesive to the channel of the support portion, a connection portion formed in the fit hole and adapted to connect the supply channel to a base end of the channel, and a cover member adapted to press the fit portion fitted with the fit hole and attach the fit portion to the fit hole.

In such a case, the channel of the support portion can be connected to the supply channel of the attachment portion when the fit portion of the support portion is fitted with the fit hole. The cover member presses and attaches the fit portion of the support portion in the fit hole and covers the fit hole. Thus, with the cloth bonding apparatus, not only the support portion can be attached to the main body, but also drying of the adhesive can be prevented and a change in a temperature of the adhesive can be restricted due to the cover member covering the surrounding of the fit hole.

In the cloth bonding apparatus, the attachment portion may further include a sealing member positioned at the connection portion and adapted to seal a gap between the base end of the channel and the connection portion.

In such a case, a pressing force of the cover member against the fit portion can be transmitted to the sealing member positioned at the connection portion of the fit hole. Consequently, the sealing member can seal the gap between the base end of the channel and the connection portion. Thus, a possibility that the adhesive leaks from the connection portion can be reduced.

In the cloth bonding apparatus, a length of the channel of the first support portion may be the same as a length of the channel of the second support portion.

In such a case, regardless of which of the first and second support portions is attached, a temperature and a pressure of the adhesive may be equal to each other. Thus, the cloth bonding apparatus may not need to change its control depending on the attached support portion. Regardless of which of the first and second support portions is attached, the cloth bonding apparatus can keep work efficiency and quality after the bonding equal.

In the cloth bonding apparatus, the switch portion may includes a movable portion that supports the nozzle at an end portion thereof, and a base portion that rotatably supports the movable portion. The posture of the support portion may be switched between the first posture and the second posture along with a rotation of the movable portion relative to the base portion.

In such a case, various bonding processes can be performed with one bonding apparatus, without suffering from the restrictions on the movement of the cloth by the support portion. The length of the channel will not change even when the posture of the support portion is switched. Thus, the temperature of the adhesive, the pressure of the adhesive inside the channel, and the like will not vary. Therefore, the cloth bonding apparatus may not need to change its control depending on the posture of the support portion. The cloth bonding apparatus can keep the work efficiency and the quality after the bonding equal even when the posture of the support portion changes.

In the cloth bonding apparatus, a center position of rotation of the movable portion may be positioned on a vertical plane that passes through a center position in a longitudinal direction of the discharge port of the nozzle and that extends in the feed direction.

In such a case, when the movable portion rotates, the center position in the longitudinal direction of the discharge port can be positioned on substantially the same straight line that is parallel with the feed direction of the cloth. Thus, the worker can switch the posture of the support portion (a projection direction of the nozzle) simply with a rotation of the movable portion such that the position of the discharge port is substantially the same.

In the cloth bonding apparatus, the center position in the longitudinal direction of the discharge port of the nozzle may be positioned on an extension of a rotational axis line of the movable portion.

In such a case, the center position in the longitudinal direction of the discharge port of the nozzle will not change even when the movable portion rotates. Thus, the cloth bonding apparatus can discharge the adhesive at the same position as the position before the posture was switched even when the posture of the support portion is switched.

### BRIEF DESCRIPTION OF THE DRAWINGS

Exemplary embodiments of the present invention will be described below in detail with reference to the accompanying drawings in which:
Fig. 1 is a perspective view of a cloth bonding apparatus 1 having a first support portion 31 attached thereto as viewed from front upper left;
Fig. 2 is a perspective view of an internal configuration of the cloth bonding apparatus 1 as viewed from front upper left;
Fig. 3 is a cross sectional view of a pump casing 26 and the first support portion 31 as viewed from the front of the cloth bonding apparatus 1;
Fig. 4 is a perspective view of the cloth bonding apparatus 1 having a second support portion 51 attached thereto as viewed from front upper left;
Fig. 5 is a cross sectional view of the pump casing 26 and the second support portion 51 as viewed from the front of the cloth bonding apparatus 1;
Fig. 6 is a perspective view of a cloth bonding apparatus 101 as viewed from front upper left;
Fig. 7 is a cross sectional view of a support portion 131 in a first posture as viewed from the front of the cloth bonding apparatus 1; and
Fig. 8 is a cross sectional view of the support portion 131 in a second posture as viewed from the front of the cloth bonding apparatus 1.

### DETAILED DESCRIPTION OF EXEMPLARY EMBODIMENTS

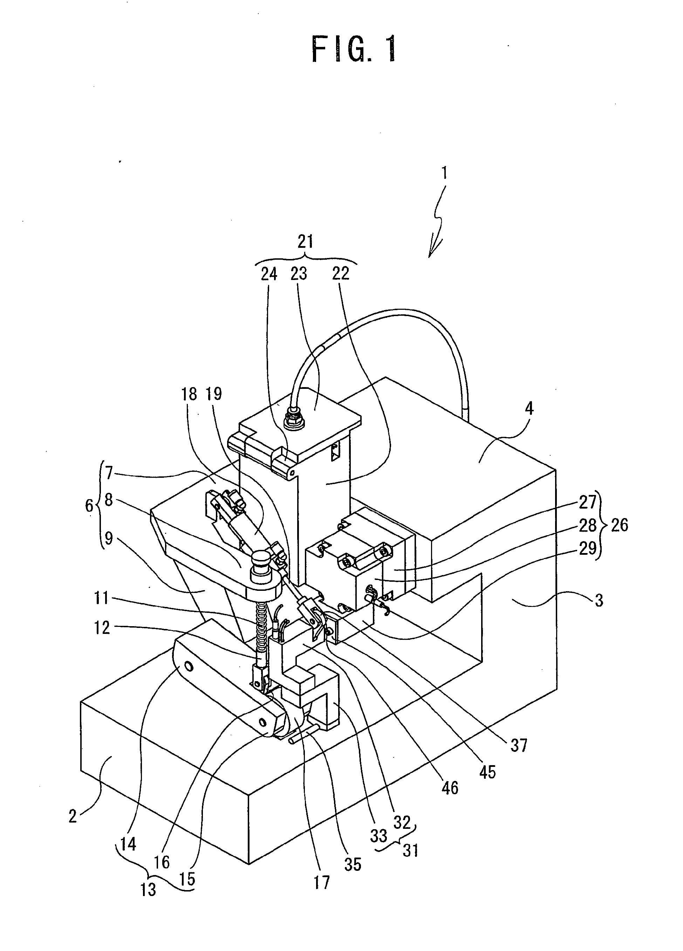

A cloth bonding apparatus 1 according to the present invention will be described below with reference to Figs. 1 to 5.

The configuration of the cloth bonding apparatus 1 will be described with reference to Fig. 1. In the following description, it is defined that the upper side, the lower side, the lower right side, the upper left side, the upper right side, and the lower left side of Fig. 1 are the upper side, the lower side, the front side, the rear side, the right side, and the left side of the cloth bonding apparatus 1, respectively. The cloth bonding apparatus 1 shown in Fig. 1 includes a first support portion 31. A nozzle 35 projects leftwards from the first support portion 31. The nozzle 35 intersects with the cloth feed direction.

As shown in Fig 1, the cloth bonding apparatus 1 includes a bed portion 2, a pillar portion 3 and an arm portion 4. The bed portion 2 has a substantially rectangular parallelepiped shape with the right-and-left direction as the longitudinal direction. The bed portion 2 is fixed on a table (not shown). The pillar portion 3 extends vertically upwards from the right end of the bed portion 2. The arm portion 4 is connected to the upper end of the pillar portion 3 and extends leftward from the left side face of the pillar portion 3.

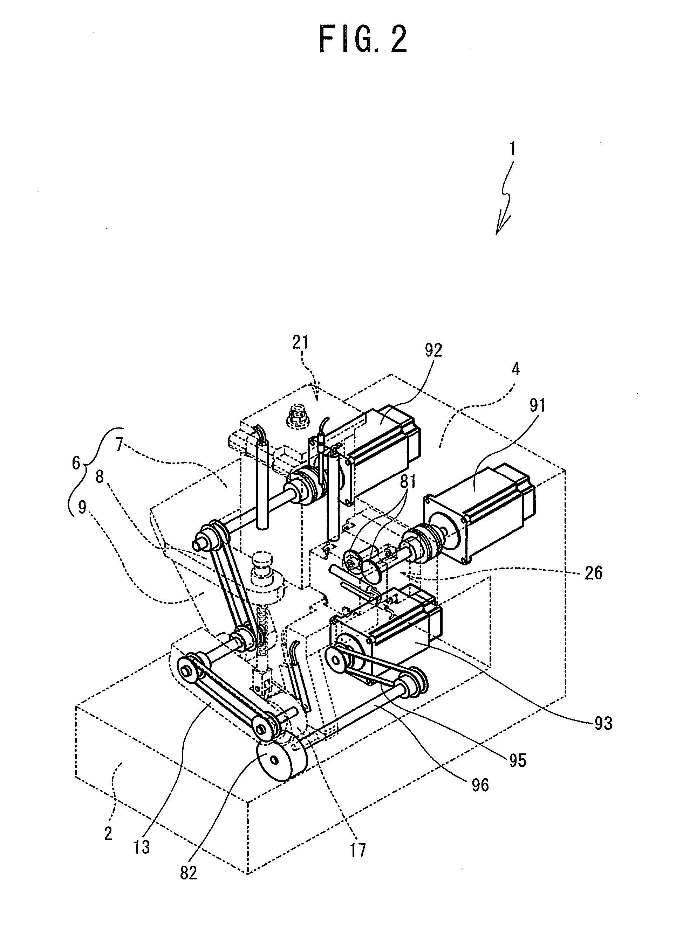

The bed portion 2 includes therein a lower feed roller 82 (see Fig. 2), a third motor 93 (see Fig. 2), and the like. The lower feed roller 82 presses and feeds a cloth or cloths in conjunction with an upper feed roller 17, which will be described later. The third motor 93 drives the lower feed roller 82. The bed portion 2 functions as a base that supports the pillar portion 3. The pillar portion 3 supports the arm portion 4. The arm portion 4 supports a beam portion 6, a storage chamber 21, and a pump casing 26 from behind in this order. The arm portion 4 includes therein a first motor 91 (see Fig. 2), a second motor 92 (see Fig. 2) and the like. The first motor 91 drives a gear pump 81 (see Fig. 2) that will be described later. The second motor 92 drives the upper feed roller 17.

The beam portion 6, the storage chamber 21 and the pump casing 26 will be described below in order. The beam portion 6 and a roller holding portion 13 connected to the beam portion 6 will be described first. As shown in Fig. 1, the beam portion 6 includes a body portion 7, a spring support portion 8, and a column portion 9. The body portion 7 is a member extending horizontally leftward from the rear left end of the arm portion 4. The length of the body portion 7 in the right-and-left direction is about one third of the length of the bed portion 2 in the right-and-left direction. The spring support portion 8 has a plate shape and extends horizontally forward from the left end portion of the body portion 7. The length of the spring support portion 8 in the front-and-rear direction is about half the length of the bed portion 2 in the front-and-rear direction. The column portion 9 extends obliquely downward from the body portion 7 at about 45 degrees relative to the horizontal plane. There is a gap between the lower end of the column portion 9 and the bed portion 2.

The spring support portion 8 has a hole (not shown) in the front end portion. The spring support portion 8 supports a shaft portion 12 in a vertically movable manner. The shaft portion 12 is inserted through a spring 11. The upper end part of the shaft portion 12 is inserted into the hole of the spring support portion 8. The column portion 9 has a shaft portion (not shown) extending horizontally leftward from the lower end part thereof. The shaft portion supports a rear end portion 14 of the roller holding portion 13. The roller holding portion 13 may swing a front end portion 15 in the vertical direction with the shaft portion as the center of swing. The body portion 7 is provided with an air cylinder 18 at the right side of the spring support portion 8. The air cylinder 18 is directed for moving the position of a first support portion 31, which will be described later.

The front end portion 15 of the roller holding portion 13 rotatably supports the upper feed roller 17. The upper feed roller 17 has a cylindrical shape. The upper feed roller 17 is positioned in the vicinity of the back of the nozzle 35. The nozzle 35 projects leftward from the first support portion 31. The roller holding portion 13 has a shaft support portion 16 on the upper face slightly forward from the center. The shaft support portion 16 supports the lower end of the shaft portion 12 inserted through the spring 11. The spring 11 is interposed between the spring support portion 8 and the bottom portion of the shaft portion 12. The spring 11 urges the shaft portion 12 downward thereby urging the roller holding portion 13 connected to the shaft portion 12 downward.

The storage chamber 21 will be described below. The storage chamber 21 has a substantially rectangular parallelepiped shape with the vertical direction as the longitudinal direction. The storage chamber 21 extends upward from the left side of the arm portion 4 and from the back of the pump casing 26. The storage chamber 21 includes a body portion 22, a cover portion 23, and a cover shaft portion 24. The body portion 22 has a bottomed tube shape having an opening at the top. The cover portion 23 covers the opening at the top of the body portion 22. The cover shaft portion 24 supports the cover portion 23 in an openable/closable manner. The storage chamber 21 stores an adhesive inside the body portion 22. The stored adhesive may be supplied from the storage chamber 21 to the nozzle 35 via the gear pump 81 (see Fig. 2) as needed.

The pump casing 26 will be described below. As shown in Fig. 1, the pump casing 26 includes a first pump casing 27 and a second pump casing 28. The first pump casing 27 is a substantially cubic member. The first pump casing 27 is fixed on the left side face of the arm portion 4 with four screws. The first pump casing 27 has a concave portion (not shown) on its left side. The first pump casing 27 includes the gear pump 81 (see Fig. 2) inside the concave portion. The gear pump 81 supplies an appropriate amount of the adhesive to the nozzle 35 with high accuracy. The second pump casing 28 is fixed to the left side face of the first pump casing 27 with four screws to cover the gear pump 81. The first pump casing 27 and the second pump casing 28 form a pump chamber. The gear pump 81 supplies the adhesive to the nozzle 35 in a pressurized manner.

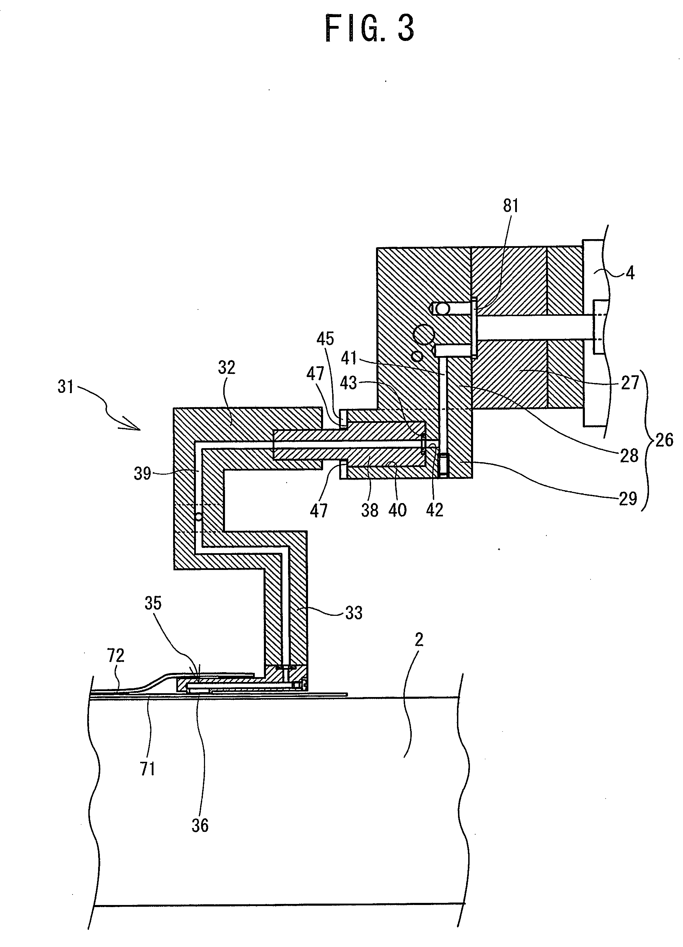

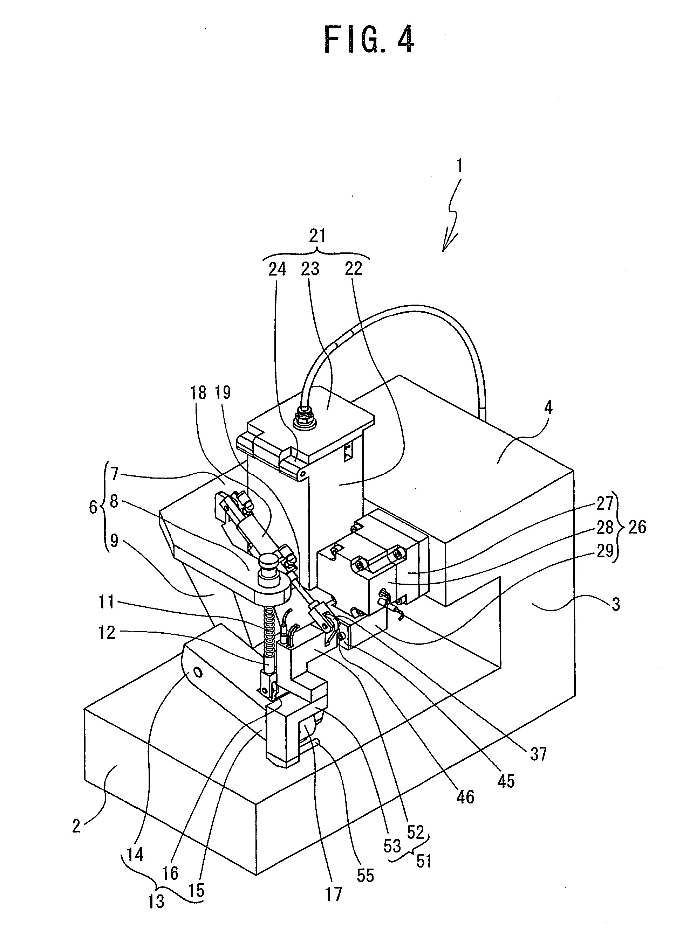

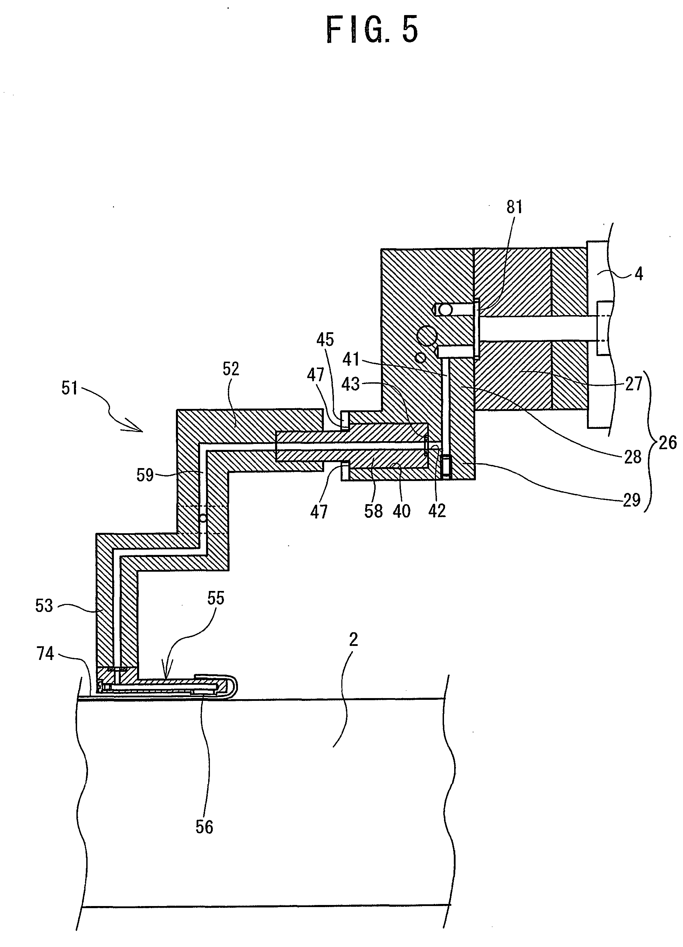

The second pump casing 28 includes an attachment portion 29 on its bottom portion. The first support portion 31 or the second support portion 51 (see Figs. 4 and 5) can be attached to or detached from the attachment portion 29. The first support portion 31 and the second support portion 51 are hereinafter collectively referred to as the support portions 31 and 51. The attachment portion 29 is substantially rectangular parallelepiped. Either one of the support portions 31 and 51 attached to the attachment portion 29 is swingable about a fit portion 38 (see Fig. 3) that will be described later. The worker fits either one of the support portions 31 and 51, which is suitable for the bonding process, into a specified position of the attachment portion 29. Then the worker arranges a cover member 45 on a left side face of the attachment portion 29. The worker fixes the cover member 45 on the attachment portion 29 with a screw 46, thereby swingably attaching one of the support portions 31 and 51 to the attachment portion 29.

The first support portion 31 will be described. The first support portion 31 includes a base portion 32 and an arm portion 33. The base portion 32 is a portion adapted to be connected to the attachment portion 29. The base portion 32 extends leftward from the attachment portion 29, bends downward a its left end portion and further bends forward at its lower end portion. The arm portion 33 is a portion that supports the nozzle 35. The arm portion 33 extends rightward from a lower front portion of the base portion 32 and then bends downward at its right end portion. The nozzle 35 has a bar shape and projects leftward from a lower end portion of the arm portion 33. The nozzle 35 includes a discharge port 36 (see Fig. 3) through which the adhesive is dischargeable. When the cloth bonding operation is performed, the discharge port 36 is positioned at a lower face of the nozzle 35.

The base portion 32 includes a drive transmitting portion 37. The drive transmitting portion 37 supports an end of a movable portion 19 of the air cylinder 18. The first support portion 31 swings back and forth along with the back-and-forth movement of the movable portion 19 of the air cylinder 18. The nozzle 35 moves, along with the back-and-forth swing of the first support portion 31, to a position (use position) where the worker performs the cloth bonding operation and to a position (maintenance position) where the worker performs maintenance. The detailed structure of the first support portion 31 and the detailed structure for attaching the support portions 31 and 51 to the attachment portion 29 will be described later.

The internal configuration of the cloth bonding apparatus 1 will be described with reference to Fig. 2. The cloth bonding apparatus 1 includes therein the first motor 91, the second motor 92, the third motor 93 and the like. The first motor 91 drives the gear pump 81. The second motor 92 drives the upper feed roller 17. The third motor 93 drives the lower feed roller 82.

The first motor 91 transmits a rotation drive force to the gear pump 81 via a rotary shaft extending inside the first pump casing 27 (see Fig. 1) thereby driving the gear pump 81. The first motor 91 is positioned inside the arm portion 4 and to the right side of the portion where the pump casing 26 is connected to the arm portion 4. The gear pump 81 supplies a predetermined amount of adhesive to the nozzle 35 (see Figs. 1 and 3) or to the nozzle 55 (see Figs. 4 and 5).

The second motor 92 transmits a rotation drive force to the upper feed roller 17 via a plurality of rotary shafts and belts provided inside the beam portion 6 and the roller holding portion 13, thereby driving the upper feed roller 17. The second motor 92 is positioned inside the arm portion 4 and to the right side of the portion where the beam portion 6 is connected with the arm portion 4. The upper feed roller 17 rotates along with the rotation of the second motor 92.

The third motor 93 transmits a rotation drive force to the lower feed roller 82 via a belt 95 and a rotary shaft 96 provided inside the bed portion 2, thereby driving the lower feed roller 82. The third motor 93 is positioned within the right end of the bed portion 2. The lower feed roller 82 is fixed to the rotary shaft 96. The belt 95 is crossed between a pulley of a rotary shaft of the third motor 93 and a pulley at the right end of the rotary shaft 96 inside the bed portion 2. The lower feed roller 82 rotates along with the rotation of the third motor 93. The upper feed roller 17 and the lower feed roller 82 rotate to press the cloth arranged between the upper feed roller 17 and the lower feed roller 82 and to feed the cloth in the cloth feed direction from front to back. The upper feed roller 17 and the lower feed roller 82 correspond to the "feeding portion" of the present invention.

The structure for attaching the first support portion 31 to the attachment portion 29 will be described with reference to Fig. 3. A base end of the first support portion 31 includes the fit portion 38. The attachment portion 29 of the pump casing 26 includes a fit hole 40. The fit portion 38 has a cylindrical shape. The diameter of the fit portion 38 on the base end side (the right side in Fig. 3) is larger than the diameter of the fit portion 38 on the other end (the left side in Fig. 3). The fit portion 38 includes a step portion 47 between the base end and the other end. The fit hole 40 is open to the left side of the attachment portion 29. The base end portion of the fit portion 38 fits into the fit hole 40 from the left side. The first support portion 31 attached to the attachment portion 29 can swing back and forth about the central axis of the fit portion 38.

The first support portion 31 includes therein a channel 39. The channel 39 is a passage for leading the adhesive from the fit portion 38 provided at the base end of the first support portion 31 to the nozzle 35. The channel 39 extends leftward from the center of a circular right end face of the fit portion 38 and leads to the nozzle 35 while bending along the shapes of the base portion 32 and the arm portion 33.

The second pump casing 28 and the attachment portion 29 of the pump casing 26 include therein a supply channel 41. The supply channel 41 is a passage for supplying the adhesive to the channel 39 in the first support portion 31. The supply channel 41 extends leftward from a lower end portion of the gear pump 81, bends downward at its left end and then leads to the inside of the attachment portion 29. A connection portion 42 extends leftward from slightly above the lower end of the supply channel 41 to a bottom portion of the fit hole 40. The connection portion 42 is a tube for connecting the supply channel 41 and the channel 39 of the first support portion 31. The connection portion 42 connects the supply channel 41 and the channel 39 of the first support portion 31 so that the adhesive which has been pressurized by the gear pump 81 can reach the nozzle 35 through the channel 39.

The connection portion 42 includes a sealing member 43 at its leading end (the left end in Fig. 3). The sealing member 43 is a member for sealing a gap between the leading end of the connection portion 42 and the base end (the right end in Fig. 3) of the channel 39. The sealing member 43 is an annular rubber packing having elasticity, for example. The sealing member 43 can reduce a possibility that the adhesive leaks from the gap between the connection portion 42 and the channel 39.

The cover member 45 can be fixed on the left side face of the attachment portion 29. The cover member 45 has a rectangular plate shape. The cover member 45 has a hole through which the fit portion 38 can be inserted, and a hole for a screw. When attaching the first support portion 31 to the attachment portion 29, the worker inserts the fit portion 38 into the fit hole 40 of the attachment portion 29 in a state where the fit portion 38 is being inserted into the hole of the cover member 45. The worker then inserts the screw 46 (see Fig. 1) into the hole for the screw formed in the cover member 45, and fastens the screw 46 into a screw hole (not shown) formed in the attachment portion 29. Since the screw 46 enters into the screw hole to move rightward, a rightward force is applied to the cover member 45. Thus, the cover member 45 contacts the step portion 47 of the fit portion 38. The aforementioned rightward force is applied to the sealing member 43 provided in the connection portion 42 and the sealing member 43 seals the gap between the leading end of the connection portion 42 and the base end of the channel 39. Thus, the possibility that the adhesive leaks from the vicinity of the connection portion 42 can be reduced. The cover member 45 covers the gap between the fit portion 38 and the fit hole 40 from leftward. Thus, the cover member 45 can prevent the drying of the adhesive and restrict a change in temperature of the adhesive.

The posture of the first support portion 31 and an example of the bonding process suitable for the use of the first support portion 31 will be described with reference to Fig. 3. The arm portion 33 of the first support portion 31 extends rightward from the lower end portion of the base portion 32, bends vertically at its right end portion and extends downward. The nozzle 35 projects leftward from the lower end portion of the arm portion 33. The nozzle 35 extends in a direction that intersects with the cloth feed direction (the direction from the front face side to the back face side of Fig. 3). The discharge port 36 of the nozzle 35 is positioned in front of the upper feed roller 17 (see Fig. 1). The discharge port 36 includes a plurality of holes for discharging the adhesive. The posture of the first support portion 31 attached to the attachment portion 29 is referred to as a first posture. A gap is present between the lower end of the arm portion 33 and the bed portion 2.

For example, as shown in Fig. 3, the first support portion 31 in the first posture may be suitable for use in the bonding process in which the vicinity of the right edge of an upper cloth 72 placed above the nozzle 35 is bonded to a lower cloth 71. Even in a case where the upper cloth 72 placed above the nozzle 35 is large, the upper cloth 72 will not contact the pillar portion 3 (see Fig. 1) positioned at the right of the nozzle 35. Thus, the two pieces of cloths 71 and 72 can be moved smoothly. The worker can grasp or press the two pieces of cloths 71 and 72 on the left side of the cloth bonding apparatus 1 where there is a large space. Thus, the worker can easily adjust movements of the two pieces of cloths 71 and 72.

The second support portion 51 will be described with reference to Figs. 4 and 5. As shown in Fig. 4, the second support portion 51 attached to the attachment portion 29 supports the nozzle 55. The nozzle 55 extends in a direction that intersects with the cloth feed direction. The aforementioned points are the same as the nozzle 35 (see Fig. 3) of the first support portion 31. The nozzle 55 projects rightward from the second support portion 51. This point is different from the nozzle 35 of the first support portion 31. The nozzle 55 of the second support portion 51 projects from a direction that is opposite to a direction from which the nozzle 35 of the first support portion 31 projects, with respect to a position where the adhesive adheres to the cloths.

As shown in Fig. 5, the second support portion 51 includes a base portion 52 and an arm portion 53, similar to the first support portion 31. The base portion 52 is a portion adapted to be connected to the attachment portion 29. The structure of the base portion 52 is the same as the structure of the base portion 32 of the first support portion 31 described above. The base end of the base portion 52 has a fit portion 58. Thus, by inserting the fit portion 58 into the fit hole 40 and fixing it with a screw, the worker can removably and swingably attach the fit portion 58 to the attachment portion 29. The arm portion 53 of the second support portion 51 has a symmetrical shape with respect to the arm portion 33 of the first support portion 31. Thus, a length of a channel 59 formed inside the second support portion 51 is the same as a length of the channel 39 formed inside the first support portion 31. The number of bending portions and bending angles are the same between the channels 59 and 39.

The posture of the second support portion 51 and an example of the bonding process suitable for use of the second support portion 51 will be described with reference to Fig. 5. The arm portion 53 of the second support portion 51 extends leftward from the lower end portion of the base portion 52, bends vertically at its left end portion and further extends downward. The nozzle 55 projects rightward from the lower end portion of the arm portion 53. The nozzle 55 extends in the direction that intersects with the cloth feed direction (the direction from the front face side of Fig. 5 to the back face side thereof). A discharge port 56 of the nozzle 55 is positioned in front of the upper feed roller 17 (see Fig. 4). The posture of the second support portion 51 attached to the attachment portion 29 is referred to as a second posture.

For example, as shown in Fig. 5, the second support portion 51 in the second posture may be suitable for use in the bonding process in which an edge of a piece of cloth 74 is folded and bonded. In such a case, the worker folds the edge of the cloth 74 so as to cover the leading end of the nozzle 55 on the right side. The cloth 74 passes below the nozzle 55 and extends to the left side on the upper surface of the bed portion 2. Thus, the pillar portion 3 (see Fig. 4) positioned to the right side of the nozzle 55 will not restrict the movement of the cloth 74. Further, the worker can adjust a position and a movement of the cloth 74 on the left side of the cloth bonding apparatus 1 where there is a large space.

As described above, in the cloth bonding apparatus 1 according to the first embodiment, the posture of the support portion that supports the nozzle can be switched between the first posture and the second posture. Specifically, the first support portion 31 can take the first posture when the first support portion 31 is attached to the attachment portion 29. The second support portion 51 can take the second posture when the second support portion 51 is attached to the attachment portion 29. In the first posture, the nozzle 35 of the first support portion 31 extends in the leftward direction, which is a direction (first direction) that intersects with the cloth feed direction. In the second posture, the nozzle 55 of the second support portion 51 extends in the rightward direction (second direction) that intersects with the cloth feed direction and that is opposite to the first direction. The worker can alternatively attach either one of the first support portion 31 to take the first posture and the second support portion 51 to take the second posture to the attachment portion 29.

When two layers of cloth are sewn using a sewing machine with a needle, the needle and a needle bar will not restrict a movement of the cloth. To the contrary, in the cloth bonding apparatus 1 having either one of the nozzles 35 and 55 extending to intersect with the cloth feed direction, the movement of the cloth may be restricted by either of the support portions 31 and 51. With the cloth bonding apparatus 1 according to the first embodiment, the worker can selectively attach either one of the support portions 31 and 51 depending on the bonding process, so that the restrictions on the movement of the cloth due to either one of the support portion 31 and 51 can be avoided. Thus, the worker can perform various bonding processes using one cloth bonding apparatus 1.

In the cloth bonding apparatus 1 according to the first embodiment, either one of the fit portion 38 and 58 formed at the base end of the support portions 31 and 51 fits into the fit hole 40 of the attachment portion 29. Then, either one of the channels 39 and 59 for the adhesive included in the support portion 31 and 51 is connected to the supply channel 41 of the pump casing 26. The worker can attach the cover member 45 to the attachment portion 29 in this state. The cover member 45 presses and attaches the one of the fit portions 38 and 58 of the support portions 31 and 51 into the fit hole 40 and covers the fit hole 40. The pressing of the cover member 45 is transmitted to the sealing member 43 in the fit hole 40. Thus, the cloth bonding apparatus 1 is configured such that not only one of the support portions 31 and 51 can be attached to the main body of the apparatus, but also the possibility that the adhesive leaks from the connection portion 42 can be reduced. In the cloth bonding apparatus 1, the cover member 45 covers the surrounding of the fit hole 40. Therefore, the cloth bonding apparatus 1 can prevent the drying of the adhesive. The cloth bonding apparatus 1 can also restrict a change in temperature of the adhesive. Thus, the worker can easily adjust the temperature of the adhesive and keep appropriate viscosity.

In the cloth bonding apparatus 1 according to the first embodiment, the channel 39 included in the first support portion 31 has the same length as the channel 59 included in the second support portion 51. Thus, in the cloth bonding apparatus 1, regardless of whether the first support portion 31 or the second support portion 51 is attached, the temperature of the adhesive, the pressure of the adhesive inside the channel, and the like can be set to be the same. Specifically, the arm portion 33 of the first support portion 31 and the arm portion 53 of the second support portion 51 are symmetrical with respect to each other. In other words, the arm portion 33 of the first support portion 31 and the arm portion 53 of the second support portion 51 are the same in the number of positions where the channel bends and in bending angles. Thus, in the cloth bonding apparatus 1, regardless of which of the support portions 31 and 51 is attached, the temperature and pressure of the adhesive will not vary. Thus, regardless of which of the support portions 31 and 51 is attached, the cloth bonding apparatus 1 will not need to change the temperature control of the adhesive, the output control of the gear pump 81, and the like. Regardless of which of the support portions 31 and 51 is attached, the cloth bonding apparatus 1 can keep work efficiency and quality after the bonding equal.

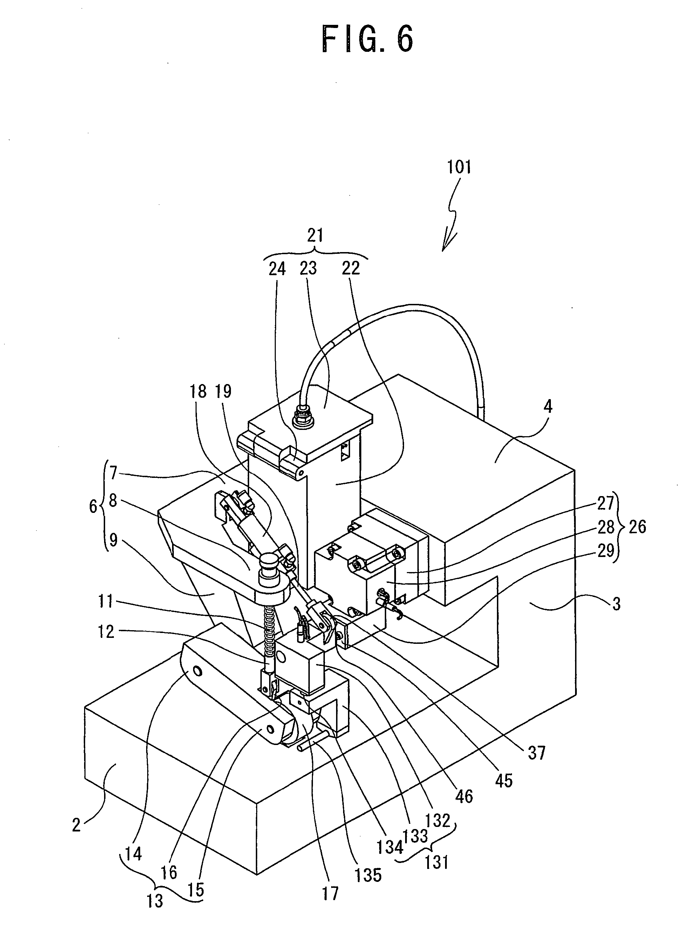

A cloth bonding apparatus 101 according to a second embodiment will be described with reference to Figs. 6 to 8. The cloth bonding apparatus 101 according to the second embodiment is the same as the cloth bonding apparatus 1 according to the first embodiment except for the structure of a support portion 131. Thus, the same reference numerals are denoted to the same components and the explanation thereof will be omitted.

As shown in Fig. 6, the support portion 131 is connected to the attachment portion 29 of the main body of the cloth bonding apparatus 101. The support portion 131 supports a nozzle 135. The support portion 131 includes a base portion 132 and a movable portion 133. The base portion 132 is swingably connected to the attachment portion 29. The movable portion 133 can rotate by 180 degrees about a shaft portion 134. The shaft portion 134 extends in the longitudinal direction of the support portion 131. The posture of the support portion 131 can be switched between the first posture and the second posture along with the rotation of the movable portion 133. In the first posture, the nozzle 135 projects leftward from the support portion 131. In the second posture, the nozzle 135 projects rightward from the support portion 131. The movable portion 133 which is rotatably connected to the base portion 132 functions as a switch portion for switching the posture of the support portion 131.

The structure of the support portion 131 will be described in detail. As shown in Fig. 6, the base portion 132 of the support portion 131 extends leftward from the attachment portion 29 of the main body of the cloth bonding apparatus 101 and bends forward at its left end portion. The movable portion 133 is rotatably connected to the bottom of the left front end portion of the base portion 132 via the shaft portion 134. The movable portion 133 extends outward (toward the upper right side in Fig. 6) from the center of rotation and bends downward at its end portion. The movable portion 133 supports the nozzle 135 at its lower end portion. The nozzle 135 projects from the lower end portion of the movable portion 133 toward the center of rotation of the movable portion 133 (toward the lower left side in Fig. 6).

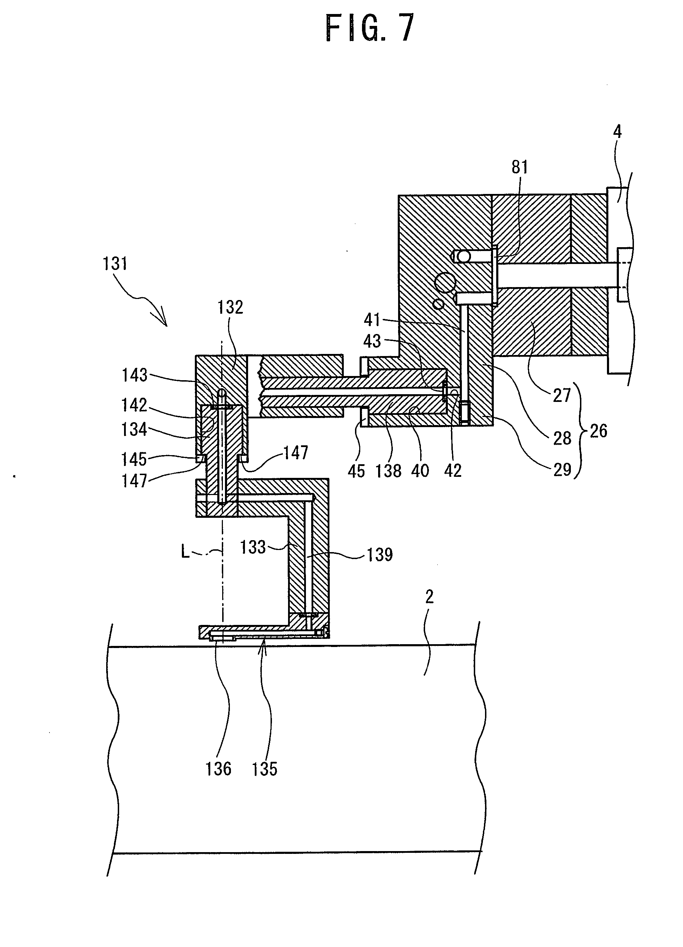

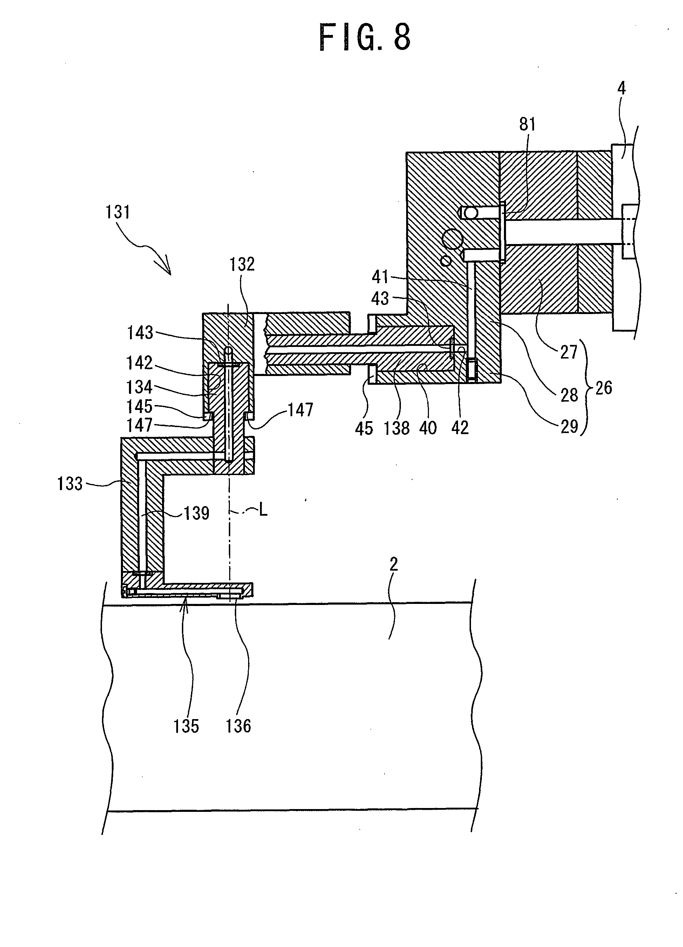

When the movable portion 133 rotates by 180 degrees from the state shown in Fig. 7, the support portion 131 takes the second posture shown in Fig. 8. When the movable portion 133 rotates by 180 degrees from the state shown in Fig. 8, the support portion 131 takes the first posture shown in Fig. 7.

As shown in Figs. 7 and 8, the structure for attaching the support portion 131 to the attachment portion 29 of the cloth bonding apparatus 101 is the same as the structure of the cloth bonding apparatus 1 according to the first embodiment. The worker first inserts a cylindrical fit portion 138 formed at the base portion 132 of the support portion 131 into the fit hole 40 of the attachment portion 29. The worker then fixes the cover member 45 on the attachment portion 29. Consequently, the base portion 132 of the support portion 131 cab be swingably connected to the attachment portion 29.

A rotation fit hole 142 is formed at the left front end portion of the base portion 132. The rotation fit hole 142 can be fitted with the shaft portion 134. The rotation fit hole 142 is a bottomed cylindrical hole. The rotation fit hole 142 is open to the leading end side (the lower side in Figs. 7 and 8) of the base portion 132. The shaft portion 134 is fixed on the movable portion 133. The shaft portion 134 has a cylindrical shape. The diameter of the shaft portion 134 on the base end side (the upper side of Figs. 7 and 8) is larger than the diameter of the shaft portion 134 on the other end side (the lower side in Figs. 7 and 8). The shaft portion 134 has a step portion 147 between the base end and the other end. The shaft portion 134 can fit into the rotation fit hole 142 from below. The worker then fixes the cover member 145 having a rectangular plate shape to the lower side of the left front end portion of the base portion 132 with a screw (not shown). The cover member 145 contacts the step portion 147. Thus, the shaft portion 134 can be rotatably connected to the base portion 132.

The support portion 131 includes therein a channel 139. The channel 139 is adapted to lead the adhesive from the fit portion 138 at the base end of the support portion 131 to the nozzle 135. The channel 139 extends leftward from the center of a circular right end face of the fit portion 138, bends along the shapes of the base portion 132 and the movable portion 133 and leads to the nozzle 135. A sealing member 143 for preventing a leakage of the adhesive is provided at the base end of the shaft portion 134 in the channel 139.

The shaft portion 134 serves as the center position of rotation of the movable portion 133. The center position in the longitudinal direction of a discharge port 136 of the nozzle 135 is positioned on an extension of a rotational axis line L of the movable portion 133. In this case, the center position in the longitudinal direction of the discharge port 136 of the nozzle 135 will not change even when the movable portion 133 rotates.

As described above, in the cloth bonding apparatus 101 according to the second embodiment, the posture of the support portion 131 that supports the nozzle 135 can be switched between the first posture and the second posture simply with the rotation of the movable portion 133. Thus, by rotating the movable portion 133, the worker can avoid the restrictions on the movement of the cloth by the support portion 131. Therefore, the worker can perform various bonding processes without any restrictions on the movement of the cloth. The length of the channel 139 will not change even when the movable portion 133 is rotated. Thus, the temperature of the adhesive, the pressure of the adhesive inside the channel 139, and the like will not vary. Therefore, the cloth bonding apparatus 101 will not need to change its control depending on the posture of the support portion 131. The cloth bonding apparatus 101 can keep the work efficiency and the quality after the bonding equal even when the posture of the support portion 131 changes.

In the cloth bonding apparatus 101 according to the present embodiment, the center position in the longitudinal direction of the discharge port 136 is positioned on the extension of the rotational axis line L of the shaft portion 134. Thus, the center position in the longitudinal direction of the discharge port 136 will not change even when the movable portion 133 is rotated. Thus, the cloth bonding apparatus 101 can discharge the adhesive at the same position as the position before the posture was switched even when the posture of the support portion 131 changes.

The configurations described in the above embodiments are exemplary and various modifications may be made. For example, the shapes of the first support portion 31, the second support portion 51 and the support portion 131 according to the above embodiments can be appropriately modified. For example, the number of bending portions can be changed. The bending portion may be formed in a curved shape. The first embodiment exemplifies the two support portions 31 and 51 as the support portion that can be attached to the attachment portion 29. However, there may be three or more support portions that can be attached to the attachment portion 29.

The structure for attaching the first support portion 31, the second support portion 51 and the support portion 131 to the attachment portion 29 can be appropriately changed. For example, in the first embodiment, the fit portions 38 and 58 are both formed to be cylindrical for making the support portions 31 and 51 swingable. The fit portions 38 and 58 may have another shape such as a prismatic column shape, if the support portions 31 and 51 do not need to be swingable. Further, the base portion 132 of the support portion 131 in the second embodiment may be formed integrally with the pump casing 26 of the main body of the apparatus.

In the above embodiments, each of the sealing members 43 and 143 for preventing a leakage of the adhesive is formed as an annular rubber packing having elasticity. The sealing members 43 and 143, however, only need to prevent the leakage of the adhesive. Thus, the sealing members 43 and 143 may not be annular. The sealing members 43 and 143 may be of a different material. Further, no sealing member needs to be provided, if the adhesive does not leak.

The center position of rotation of the movable portion 133 with respect to the base portion 132 may be positioned on a vertical plane that passes through the center position in the longitudinal direction of the discharge port 136 of the nozzle 135 and that extends in the cloth feed direction. For example, in Fig. 7, the rotational axis line L of the movable portion 133 extends in the vertical direction, but the rotational axis line may be inclined toward the front face side of the sheet on the above-mentioned vertical plane. In this case, the nozzle 135 is positioned in front of the base portion 132. The rotational axis line may be inclined to the back face side of the sheet. In this case, the nozzle 135 is positioned behind the base portion 132. Regardless of whether the support portion 131 takes the first posture or the second posture, the discharge port 136 can be positioned on substantially the same straight line that is parallel with the cloth feed direction. Thus, the worker can switch the posture of the support portion 131 (the projection direction of the nozzle) simply with the rotation of the movable portion 133 such that the position of the discharge port 136 relative to the upper feed roller 17 and the lower feed roller 82 is substantially the same.

## Claims

1. A cloth bonding apparatus (1, 101) comprising:
a bar-shaped nozzle (35, 55, 135) that includes a discharge port (36, 56, 136), an adhesive being dischargeable between oppositely arranged two layers of cloth through the discharge port;
a feeding portion (17, 82) adapted to press and feed the two layers of cloth between which the adhesive is applied;
a support portion (31, 51, 131) that includes a channel (39, 59, 139) adapted to lead the adhesive to the nozzle and that supports the nozzle at a leading end thereof, a longitudinal direction of the nozzle intersecting with a feed direction of the two layers of cloth by the feeding portion, **characterized by**
a switch portion (29, 133) that
(a) can switch a posture of the support portion (131) between a first posture in which the nozzle (135) extends in a first direction and a second posture in which the nozzle extends in a second direction, the first direction intersecting with the feed direction, and the second direction intersecting with the feed direction and opposite to the first direction; or
(b) is adapted to be connected with a first support portion (31) whereby the nozzle (35) extends in a first direction,
and is adapted to be connected with a second support portion (51) whereby the nozzle (55) extends in a second direction, the first direction intersecting with the feed direction, and the second direction intersecting with the feed direction and opposite to the first direction; the switch portion
includes an attachment portion (29) with which the first and second support portions (31, 51) can be attached to or detached from a main body of the cloth bonding apparatus; either one of the first support portion (31) and the second support portion (51) can be alternatively attached as the support portion to the attachment portion, the first support portion being adapted to take a first posture when attached to the attachment portion, and the second support portion being adapted to take a second posture when being attached to the attachment portion; and the first support portion (31) includes a base portion (32) and an arm portion (33), the base portion (32) is a portion adapted to be connected to the attachment portion (29) and the arm portion (33) is a portion that supports the nozzle (35); and the second support portion (51) includes a base portion (52) and an arm portion (53), the base portion (52) is a portion adapted to be connected to the attachment portion (29) and the arm portion (53) is a portion that supports the nozzle (55).

2. The cloth bonding apparatus according to claim 1, wherein:
the first and second support portions (31, 51) include a fit portion (38, 58) formed at a base end thereof, and
the attachment portion includes:
a fit hole (40) adapted to fit with the fit portion of the first and second support portions (31, 51);
a supply channel (41) adapted to supply the adhesive to the channel of the first and second support portions (31, 51);
a connection portion (42) formed in the fit hole and adapted to connect the supply channel to a base end of the channel; and
a cover member (45) adapted to press the fit portion fitted with the fit hole and attach the fit portion to the fit hole.

3. The cloth bonding apparatus according to claim 2, wherein the attachment portion further includes a sealing member (42) positioned at the connection portion and adapted to seal a gap between the base end of the channel and the connection portion.

4. The cloth bonding apparatus according to any one of claims 1 to 3, wherein a length of the channel of the first support portion (31) is the same as a length of the channel of the second support portion (51).

5. The cloth bonding apparatus according to one of claims 1 to 4, wherein the switch portion includes:
a movable portion (135) that supports the nozzle at an end portion thereof; and
a base portion (132) that rotatably supports the movable portion, and
the posture of the support portion (131) can be switched between the first posture and the second posture along with a rotation of the movable portion relative to the base portion.

6. The cloth bonding apparatus according to claim 5, wherein a center position of rotation of the movable portion is positioned on a vertical plane that passes through a center position in a longitudinal direction of the discharge port of the nozzle and that extends in the feed direction.

7. The cloth bonding apparatus according to claim 6, wherein the center position in the longitudinal direction of the discharge port of the nozzle is positioned on an extension of a rotational axis line of the movable portion.

## Patentansprüche

1. Tuchfügegerät (1, 101) mit:
einer stabförmigen Düse (35, 55, 135), die einen Auslassanschluss (36, 56, 136) aufweist, wobei ein Klebemittel zwischen zwei gegenüberliegend angeordneten Tuchlagen durch den Auslassanschluss ausgelassen werden kann;
einem Vorschubabschnitt (17, 82), der daran angepasst ist, die beiden Tuchlagen zu drücken und vorzuschieben, zwischen denen das Klebemittel aufgebracht ist;
einem Stützabschnitt (31, 51, 131), der einen Kanal (39, 59, 139) aufweist, der daran angepasst ist, das Klebemittel zu der Düse zu leiten und der die Düse an ihrem vorderen Ende stützt, wobei eine Längsrichtung der Düse eine Richtung eines Vorschubs der beiden Tuchlagen durch den Vorschubabschnitt schneidet,
**gekennzeichnet durch**
einen Schaltabschnitt (29, 133), der
(a) eine Stellung des Stützabschnitts (131) zwischen einer ersten Stellung, in der sich die Düse (135) in einer ersten Richtung erstreckt, und einer zweiten Stellung schalten kann, in der sich die Düse in einer zweiten Richtung erstreckt, wobei die erste Richtung die Vorschubrichtung schneidet und die zweite Richtung die Vorschubrichtung schneidet und der ersten Richtung entgegengesetzt ist; oder
(b) daran angepasst ist, mit einem ersten Stützabschnitt (31) verbunden zu werden, wodurch sich die Düse (35) in einer ersten Richtung erstreckt, und daran angepasst ist, mit einem zweiten Stützabschnitt (51) verbunden zu werden, wodurch sich die Düse (55) in einer zweiten Richtung erstreckt, wobei die erste Richtung die Vorschubrichtung schneidet und die zweite Richtung die Vorschubrichtung schneidet und der ersten Richtung entgegengesetzt ist;
wobei der Schaltabschnitt einen Anbringungsabschnitt (29) aufweist, **durch** den der erste und der zweite Stützabschnitt (31, 51) an oder von einem Hauptkörper des Tuchfügegeräts angebracht oder abgenommen werden kann; wobei entweder der erste Stützabschnitt (31) oder der zweite Stützabschnitt (51) alternativ als der Stützabschnitt an dem Anbringungsabschnitt angebracht werden kann, wobei der erste Stützabschnitt daran angepasst ist, eine erste Stellung einzunehmen, wenn er an dem Anbringungsabschnitt abgebracht ist, und wobei der zweite Stützabschnitt daran angepasst ist, eine zweite Stellung einzunehmen, wenn er an dem Anbringungsabschnitt angebracht ist; und der erste Stützabschnitt (31) einen Basisabschnitt (32) und einen Armabschnitt (33) aufweist, wobei der Basisabschnitt (32) ein Abschnitt ist, der daran angepasst ist, mit dem Anbringungsabschnitt (29) verbunden zu werden, und der Armabschnitt (33) ein Abschnitt ist, der die Düse (35) stützt; und der zweite Stützabschnitt (51) einen Basisabschnitt (52) und einen Armabschnitt (53) aufweist, wobei der Basisabschnitt (52) ein Abschnitt ist, der daran angepasst ist, mit dem Anbringungsabschnitt (29) verbunden zu werden, und der Armabschnitt (53) ein Abschnitt ist, der die Düse (55) stützt.

2. Tuchfügegerät gemäß Anspruch 1, wobei:
der erste und der zweite Stützabschnitt (31, 51) einen Passabschnitt (38, 58) aufweisen, der an deren Basisende ausgebildet ist, und
der Anbringungsabschnitt Folgendes aufweist:
ein Passloch (40), das daran angepasst ist, an dem Passabschnitt des ersten und zweiten Stützabschnitts (31, 51) gepasst zu werden;
einen Zuführkanal (41), der daran angepasst ist, das Klebemittel zu dem Kanal des ersten und des zweiten Stützabschnitts (31, 51) zuzuführen;
einen Verbindungsabschnitt (42), der in dem Passloch ausgebildet und daran angepasst ist, den Zuführkanal mit einem Basisende des Kanals zu verbinden; und
ein Abdeckungselement (45), das daran angepasst ist, den in das Passloch eingepassten Passabschnitt zu drücken und den Passabschnitt in dem Passloch anzubringen.

3. Tuchfügegerät gemäß Anspruch 2,
wobei der Anbringungsabschnitt des Weiteren ein Dichtelement (42) aufweist, das an dem Verbindungsabschnitt positioniert und daran angepasst ist, einen Spalt zwischen dem Basisende des Kanals und dem Verbindungsabschnitt abzudichten.

4. Tuchfügegerät gemäß einem der Ansprüche 1 bis 3, wobei eine Länge des Kanals des ersten Stützabschnitts (31) gleich einer Länge des Kanals des zweiten Stützabschnitts (51) ist.

5. Tuchfügegerät gemäß einem der Ansprüche 1 bis 4, wobei der Schaltabschnitt Folgendes aufweist:
einen bewegbaren Abschnitt (135), der die Düse an deren Endabschnitt stützt; und
einen Basisabschnitt (132), der den bewegbaren Abschnitt drehbar stützt, und
die Stellung des Stützabschnitts (131) zwischen der ersten Stellung und der zweiten Stellung zusammen mit einer Drehung des bewegbaren Abschnitts relativ zu dem Basisabschnitt geschaltet werden kann.

6. Tuchfügegerät gemäß Anspruch 5,
wobei eine Drehmitte des bewegbaren Abschnitts an einer vertikalen Ebene positioniert ist, die durch eine Mittelposition in einer Längsrichtung des Auslassanschlusses der Düse hindurchtritt und sich in der Vorschubrichtung erstreckt.

7. Tuchfügegerät gemäß Anspruch 6,
wobei die Mittelposition in der Längsrichtung des Auslassanschlusses der Düse an einer Erweiterung einer Drehachse des bewegbaren Abschnitts positioniert ist.

## Revendications

1. Dispositif de liaison de tissus (1, 101) comprenant :
une buse en forme de barre (35, 55, 135) qui comporte un orifice de décharge (36, 56, 136), un adhésif pouvant être déchargé entre deux couches de tissu agencées de manière opposée à travers l'orifice de décharge ;
une partie d'alimentation (17, 82) adaptée de manière à presser et délivrer les deux couches du tissu entre lesquelles l'adhésif est appliqué ;
une partie de support (31, 51, 131) qui comporte un canal (39, 59, 139) adapté de manière à conduire l'adhésif vers la buse et qui supporte la buse à une extrémité avant de celui-ci, une direction longitudinale de la buse coupant une direction d'alimentation des deux couches de tissu par la partie d'alimentation, **caractérisé par**
une partie de basculement (29, 133) qui
(a) peut basculer une posture de la partie de support (131) entre une première posture dans laquelle la buse (135) s'étend suivant une première direction et une seconde posture dans laquelle la buse s'étend suivant une seconde direction, la première direction coupant la direction d'alimentation, et la seconde direction coupant la direction d'alimentation et étant opposée à la première direction ; ou
(b) est adaptée afin d'être reliée à une première partie de support (31) de telle sorte que la buse (35) s'étend dans une première direction, et est adaptée de manière à être reliée à une seconde partie de support (51) de telle sorte que la buse (55) s'étend dans une seconde direction, la première direction coupant la direction d'alimentation, et la seconde direction coupant la direction d'alimentation et étant opposée à la première direction ; la partie de basculement comporte une partie de fixation (29) avec laquelle les première et seconde parties de support (31, 51) peuvent être fixées sur un corps principal du dispositif de liaison de tissus ou séparées de ce dernier ; l'une ou l'autre de la première partie de support (31) et de la seconde partie de support (51) peut être fixée de manière alternée en tant que partie de support sur la partie de fixation, la première partie de support étant adaptée de manière à prendre une première posture lorsqu'elle est fixée sur la partie de fixation, et la seconde partie de support étant adaptée de manière à prendre une seconde posture lorsqu'elle est fixée sur la partie de fixation, et la première partie de support (31) comporte une partie de base (32) et une partie de bras (33), la partie de base (32) est une partie adaptée de manière à être couplée à la partie de fixation (29) et la partie de bras (33) est une partie qui supporte la buse (35) ; et la seconde partie de support (51) comporte une partie de base (52) et une partie de bras (53), la partie de base (52) est une partie adaptée de manière à être couplée à la partie de fixation (29) et la partie de bras (53) est une partie qui supporte la buse (55).

2. Dispositif de liaison de tissus selon la revendication 1, dans lequel :
les première et seconde parties de support (31, 51) comportent une partie d'assemblage (38, 58) formée au niveau d'une extrémité de base de celles-ci, et
la partie de fixation comporte :
un orifice d'assemblage (40) adapté de manière à s'assembler avec la partie d'assemblage des première et seconde parties de support (31, 51) ;
un canal d'alimentation (41) adapté de manière à délivrer l'adhésif au canal des première et seconde parties de support (31, 51) ;
une partie de liaison (42) formée sur l'orifice d'assemblage et adaptée de manière à coupler le canal d'alimentation à l'extrémité de base du canal ; et
un élément formant couvercle (45) adapté de manière à presser la partie d'assemblage assemblée avec l'orifice d'assemblage et à fixer la partie d'assemblage sur l'orifice d'assemblage.

3. Dispositif de liaison de tissus selon la revendication 2, dans lequel la partie de fixation comporte en outre un élément d'étanchéité (42) positionné au niveau de la partie de liaison et adapté de manière à sceller un jeu entre l'extrémité de base du canal et la partie de liaison.

4. Dispositif de liaison de tissus selon l'une quelconque des revendications 1 à 3, dans lequel une longueur du canal de la première partie de support (31) est identique à une longueur du canal de la seconde partie de support (51).

5. Dispositif de liaison de tissus selon l'une des revendications 1 à 4, dans lequel la partie de basculement comporte :
une partie pouvant être déplacée (135) qui supporte la buse à l'une de ses parties d'extrémité ; et
une partie de base (132) qui supporte avec possibilité de rotation la partie pouvant se déplacer, et
la posture de la partie de support (131) peut être basculée entre la première posture et la seconde posture de manière simultanée avec la rotation de la partie pouvant être déplacée par rapport à la partie de base.

6. Dispositif de liaison de tissus selon la revendication 5, dans lequel une position centrale de rotation de la partie pouvant être déplacée est agencée sur un plan vertical qui passe à travers une position centrale suivant une direction longitudinale de l'orifice de décharge de la buse et qui s'étend suivant la direction d'alimentation.

7. Dispositif de liaison de tissus selon la revendication 6, dans lequel la position centrale dans la direction longitudinale de l'orifice de décharge de la buse est agencée sur une extension d'une ligne d'axe de rotation de la partie pouvant être déplacée.
